# EUROPEAN PATENT APPLICATION

(11) **EP 0 882 635 A1**
(43) Date of publication of application: **09.12.1998**
(21) Application number: 98304181.5
(22) Date of filing: 27.05.1998
(51) Int. Cl.: B62B 9/20

(54) **Push-chair handles**

(30) Priority: 06.06.1997 GB 9711720
(71) Applicant: MACLAREN LIMITED, Long Buckby, Northamptonshire NN6 7PF (GB)
(72) Inventor: Daykin, Kevin John, Hollowell, Northampton, NN6 8RP (GB)
(74) Representative: Cooke, William Douglas

(57) **Abstract**

A handle for a push-chair is made primarily of rigid, hard material such as polypropylene, nylon or another rigid plastic. To provide improved grip and comfort, the lower part 9 of the present handle is made of a soft-feel, deformable, rubber-like 'soft-grip' surface material 7 with a high coefficient of friction, such as a rubberized plastic such as such as thick 'soft' Santoprene or PTR. The lower part of the handle may be made separately from the main body (upper part) and joined by suitable coupling means, or it may be formed by directly overmoulding the material 7 onto the upper part.

## Description

The present invention relates to handles for pushchairs.

Conventional pushchairs for babies and toddlers have two handles which are gripped firmly by a pusher (that is, someone pushing the push-chair), one in each hand. Such handles are made of a rigid, hard material such as polypropylene, nylon or another rigid plastic. Handles made of such materials are strong and lightweight, and are easily cleanable, but have the disadvantage of being uncomfortable to grip for some users. Discomfort is especially pronounced during the pushing of heavier loads because a stronger grip is required to be exerted, such as when a pushchair is designed to accommodate more than one child and two or more children are being pushed simultaneously, or when a pushchair is used to carry additional loads such as shopping bags (this latter is advised against by the manufacturers, but is known to occur). Discomfort also increases significantly during uphill and downhill pushing.

This discomfort is often significant enough to necessitate the pusher changing the position of their hands relative to the pushchair handles. In the normal gripping position, the whole hand is employed, the palm of the hand being placed against the upper part of the handle and the fingers and thumb curling in opposite directions around the underside of the handle, resulting in a tight grip. However, during the pushing of particularly heavy loads, during which discomfort may be pronounced, the pusher may change their hand position from the normal gripping position to a different position, such as a position in which the hands are placed flat against the handles rather than in the normal gripping position, in order to relieve the discomfort caused by tightly gripping the handles. However, this results in the user not gripping the handles properly, and when the pushchair is pushed in this fashion there is a danger that the pushchair is not under complete control, and this situation is therefore to be avoided.

A further problem with conventional rigid handles is that the material they are made from is usually low friction and thus slippery. There is a danger therefore that the pusher may lose their grip upon the handles, particularly when the handles are wet. Smooth handles also mean that a tighter grip is required to be exerted on the handles by the pusher in order to prevent slipping, and thus the likelihood of discomfort is increased if a tighter grip is employed. Measures have been taken to overcome the problem of slipperiness by creating a non-slip surface by means of handle designs incorporating textured effects on the smooth handle surface such as ridged or grooved patterns. These textured effects increase the co-efficient of friction of the handle surface. However, such non-slip textured surface effects only work to a limited degree, and can sometimes contribute to discomfort when holding the handles. Another method which has proved popular is to employ a design which incorporates shaped grooves or mouldings positioned on the underside of the handle to accommodate the fingers of a pusher. The fingers of the pusher rest in these grooves during pushing; the grooves are intended to allow for a better grip and prevent slipping, and also to increase comfort. Such designs do prevent slipping to a degree, especially if they are combined with a non-slip textured surface. However, the grooves or mouldings are non-adjustable and therefore pushers with above or below average sized hands often find these handles uncomfortable to hold.

Handles comprising a soft-feel, deformable, rubber-like surface material with a high co-efficient of friction, such as a rubberized plastic, are known. Such 'soft-grip' handles have been applied to hand-held tools and sports equipment, and are generally constructed by means of a soft-grip sleeve which is applied over an inner core. However, soft-grip handles with such constructions are unsuitable for application with a pushchair due to the shape of pushchair handles, which are often irregularly curved and of irregular diameter along their length, and due to the 'lip' at the outermost tip of most pushchair handles, which prevents a sleeve from being slid onto the grasping part of the handle. Additionally, such a construction method results in a handle with a soft-grip surface which extends all the way around the circumference of the handle. This is not suitable for a pushchair application, since a handle with a soft-grip surface all the way around its circumference prevents any sliding of the hands at all, whereas a degree of sliding is necessary for small hand position changes for steering and to allow repositioning of the hands during pushing in order to maximise comfort. Other soft-grip handles have been constructed using injection overmoulding, but again, the handles created have a soft-grip surface which extends all the way around the handle.

The objective of the present invention is to provide a pushchair handle which overcomes the problems of discomfort and slipping which are apparent with conventional pushchair handles.

According to the present invention, there is provided a push-chair handle, *characterized in that* its upper part is formed of a first material which is relatively rigid and has a relatively low co-efficient of friction, and its lower part is formed of a second material which has a higher co-efficient of friction than the first material.

Preferably the handle has a first free end and a second end, the second end being adapted to be attached to a push-chair frame, characterized in that the handle comprises a first material which is rigid and low friction, and a second material which has a higher co-efficient of friction than the first material, configured such that the first material forms a first external surface of the handle and the second material forms a second external surface of the handle, such that the second external surface has a higher co-efficient of friction than the first external surface.

Preferably, the first external surface of the handle is arranged as an upper surface of the handle, and the second external surface of the handle is arranged as a lower surface of the handle. The first external surface of the handle is preferably arranged to coincide with the position of a user's palm when gripping the handle in the nonnal gripping position, and preferably the co-efficient of friction of the first external surface is such to enable a user's palm to slide on the first external surface during use of the handle. The second external surface of the handle is preferably arranged to coincide with the position of a user's fingers when gripping the handle in the normal gripping position, and preferably the co-efficient of friction of the second external surface is such to prevent a user's fingers from sliding on the second external surface during use of the handle.

Preferably, the first material is polypropylene or nylon, although any other suitable rigid, low friction material could alternatively be used, and preferably the second material is a rubberized plastic material such as thick 'soft' Santoprene or PTR, although any other suitable material of higher friction than the first material could alternatively be used, such as any other rubberized plastic material.

Preferably the handle comprises a co-operating upper part and lower part, the co-operating upper part and lower part fitting together by any suitable coupling means to form a unitary structure. Preferably, the upper part is made of the first material, and comprises an upper shell, the upper shell comprising the first external surface, and the upper shell incorporating a series of parallel ribs extending from the upper shell, and a number of upper tubular projections extending from the upper shell and forming recesses, the upper tubular projections being parallel with the ribs. Alternatively, the ribs may be replaced by parallel webs or sheets, or there may be no ribs or other structural components extending from the upper shell whatsoever. In an alternative embodiment, the interior of the upper shell may be solid, apart from a series of recesses.

Preferably the lower part comprises a lower external layer made of the second material, the lower external layer comprising the second external surface, the lower part also comprising a lower shell made of the first material, the lower shell incorporating a number of lower tubular projections extending from the lower shell and orientated such that, upon co-operation of the upper part and the lower part of the handle, the lower tubular projections are parallel with the upper tubular projections and the lower tubular projections are configured to align with and fit into the recesses formed by the upper tubular projections, in order to effect coupling of the upper and lower parts of the handle by means of an interference fit. Alternatively, the lower tubular projections may form recesses into which the upper tubular projections fit upon co-operation of the upper and lower parts of the handle, in order to effect coupling of the upper and lower parts of the handle by means of an interference fit. Alternatively, the upper and lower tubular projections may co-operate by means of a snap-fit mechanism or any other suitable coupling means. Alternatively, the above-described upper and lower tubular projections may be absent and the co-operating upper part and lower part may fit together by any other suitable coupling means.

Preferably the lower external layer is formed by overmoulding the lower shell with the second material by any suitable means such as injection overmoulding.

The preferred embodiments of the present invention provide a pushchair handle which incorporates a soft-feel (rubbery) surface which is comfortable to hold. This 'soft-grip' surface also has a higher co-efficient of friction compared to conventional smooth handles, and therefore being easily grippable and non-slip. The pushchair handle additionally incorporates a low friction surface on which a pusher's hand may slide in order to aid steering and for quick and easy readjustment of the hand position during pushing in order to achieve maximum comfort during pushing.

Two push-chair handles embodying the present invention will now be described, by way of example, with reference to the drawings, in which:-
Figure 1 is a perspective view of a conventional pushchair showing its handles;
Figure 2 is a side view of the first handle;
Figure 3 is an exploded cross-sectional side view of the Figure 2 handle;
Figures 4A to 4D are cross-sectional views of the Figure 2 handle along sections A-A, B-B, C-C, and D-D in which the ribs have been omitted for clarity;
Figure 5 is a side view of the second handle; and
Figures 6A to 6D are cross-sectional views of the Figure 5 handle along sections A-A, B-B, C-C, and D-D in which the ribs have been omitted for clarity.

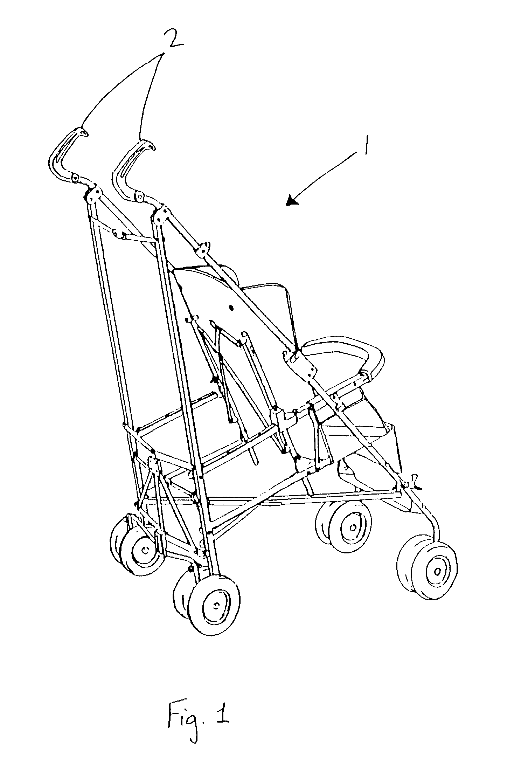

Figure 1 shows an example of a conventional pushchair 1 with conventional handles 2 attached. The handles 2 are made of a rigid material with a low co-efficient of friction relative to a pusher's hands. The handles therefore feel slippery when pushing the pushchair, and uncomfortable because of the rigidity of the material they are made of.

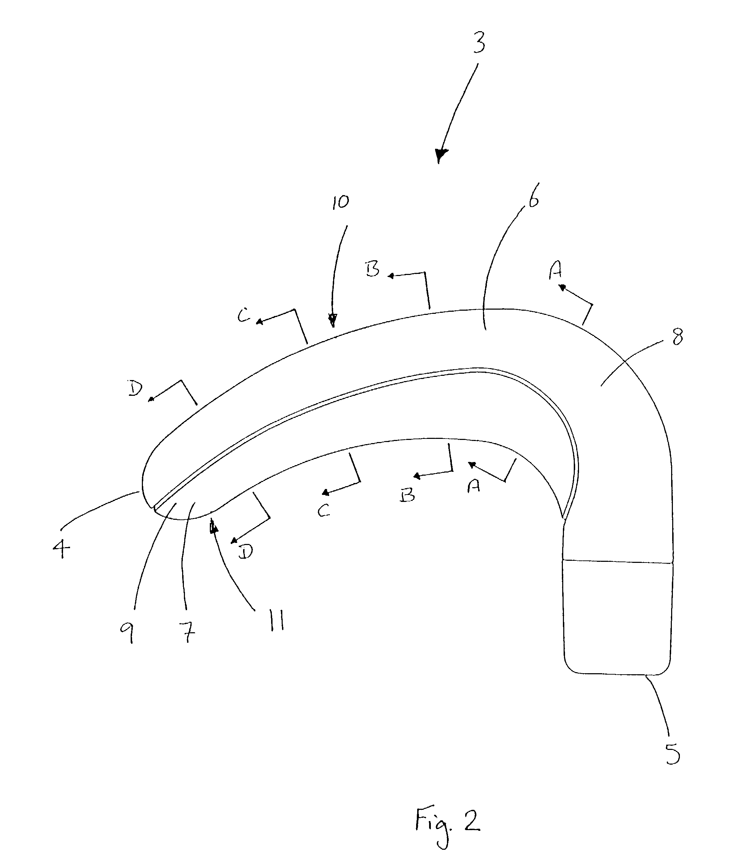

Referring now to Figure 2, this shows a handle 3, for a pushchair, comprising a first free end 4 and a second end 5 which is adapted to be attached to a frame (not shown). The handle 3 comprises a first material 6 which is rigid and of low friction, and a second material 7 which is deformable and of higher friction than the first material 6, configured such that the first material 6 forms a first external surface 8 of the handle 3 and the second material 7 forms a second external surface 9 of the handle 3.

The second external surface 9 thus has a higher co-efficient of friction than the first external surface 8.

In the Figure 2 embodiment of the present invention, the first external surface 8 of the handle 3 is arranged as an upper surface of the handle, and the second external surface of the handle is arranged as a lower surface of the handle. The first external surface 8 of the handle is arranged to coincide with the position of a user's palm when gripping the handle 3 in the normal gripping position, and the co-efficient of friction of the first external surface 8 is such to enable a user's palm to slide on the first external surface 8 during use of the handle 3. The second external surface 9 of the handle 3 is arranged to coincide with the position of a user's fingers when gripping the handle 3 in the normal gripping position, and the co-efficient of friction of the second external surface 9 is such to prevent a user's fingers from sliding on the second external surface 9 during use of the handle 3.

The first material 6 is preferably polypropylene or nylon, and the second material is preferably a rubberized plastic material such as thick 'soft' Santoprene or PTR. The above first material may alternatively be any other suitable rigid, low friction material, and the above second material may alternatively be any other suitable material of higher friction than the first material, such as any other rubberized plastic material.

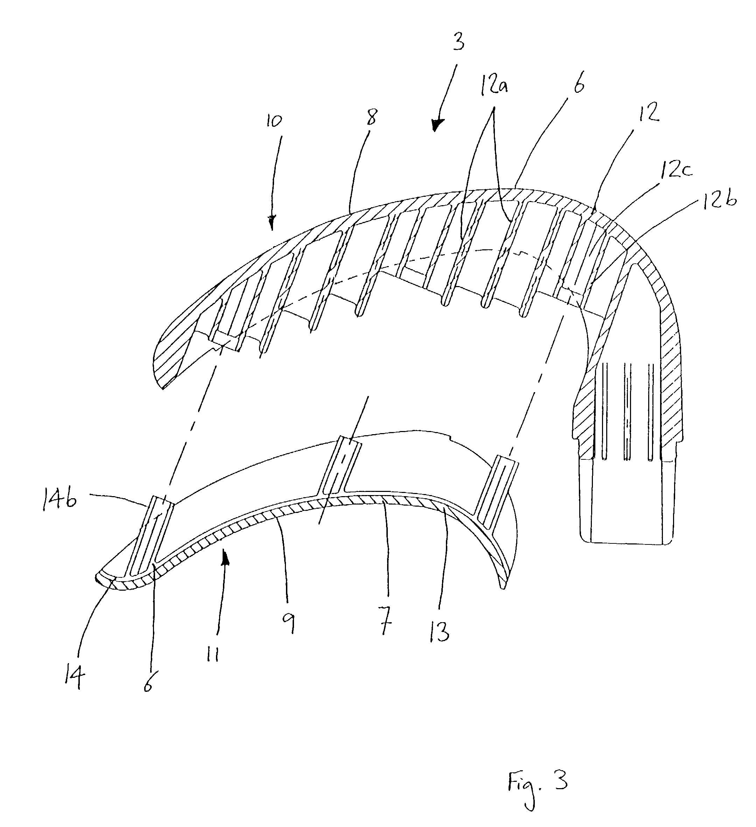

Referring now to Figures 2 and 3, the handle 3 comprises a co-operating upper part 10 and lower part 11 fitting together by any suitable coupling means to form a unitary structure. The upper part 10 is made of the first material 6, and comprises an upper shell 12 which comprises the first external surface 8 and incorporates a series of parallel ribs 12a extending from the upper shell 12, and a number of upper tubular projections 12b extending from the upper shell 12 and forming recesses 12c, the upper tubular projections 12b being parallel with the ribs 12a. The ribs 12a are structural components, which bestow shape and strength upon the handle 3, and form a structural base for the positioning of the lower part 11.

The lower part 11 comprises a lower external layer 13 made of the second material 7, the lower external layer 13 comprising the second external surface 9, the lower part 11 also comprising a lower shell 14 made of the first material 6, the lower shell 14 incorporating a number of lower tubular projections 14b extending from the lower shell 14 and orientated such that, upon co-operation of the upper part 10 and the lower part 11 of the handle 3, the lower tubular projections 14b are parallel with the upper tubular projections 12b and the lower tubular projections 14b are configured to align with and fit into the recesses 12c formed by the upper tubular projections 12b, in order to effect coupling of the upper and lower parts 10, 11, of the handle 3 by means of an interference fit.

It is to be noted that alternative embodiments are possible in which the lower tubular projections form recesses into which the upper tubular projections fit upon co-operation of the upper and lower parts of the handle, in order to effect coupling of the upper and lower parts of the handle by means of an interference fit. Further embodiments are possible in which the upper and lower tubular projections co-operate by means of a snap-fit mechanism or any other suitable coupling means, or in which the above-described upper and lower tubular projections are absent and the co-operating upper part 10 and lower part 11 fit together by any suitable coupling means such as a snap-fit mechanism.

In the Figure 3 embodiment, the lower external layer 13 is formed by overmoulding the lower shell 14 with the second material 7 by any suitable means such as injection overmoulding. The lower shell 14 is first moulded in a first mould by injection moulding, and subsequently transferred to a second mould whereupon the lower external layer 13 is moulded onto the lower shell 14 by further injection moulding. This technique gives the advantage of allowing a curved surface, such as that of the lower shell 14 in the preferred embodiment, to be bonded with the lower external layer 13 which is made of the second material 7. Furthermore, the lower external layer 13 may be moulded onto a selected surface of the lower shell 14, rather than all the way around the circumference of a part, whereas applying a sleeve would not allow this to be done, and would not be practicable for application to a curved surface.

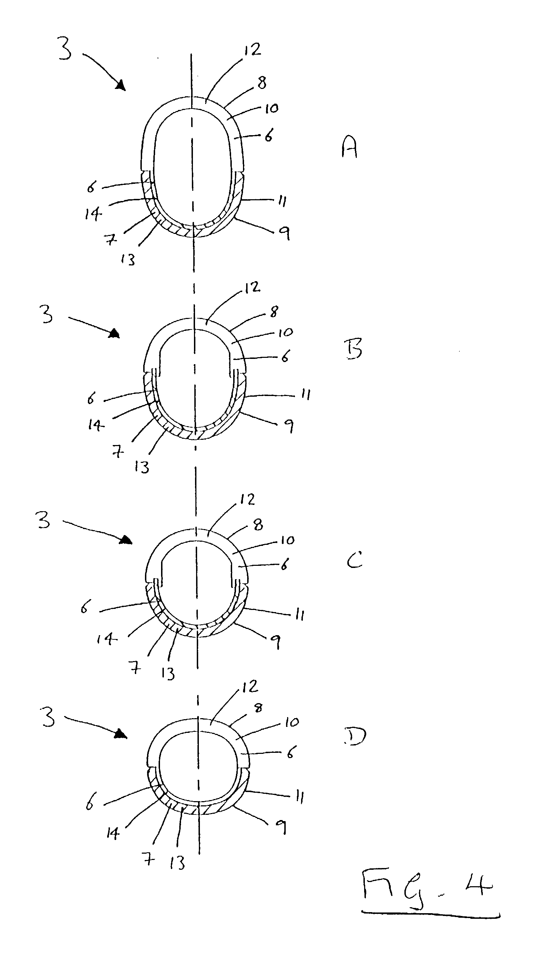

Referring now to Figures 4A to 4D, these show a series of four cross-sectional end views of the Figure 2 handle, along the sections A-A, B-B, C-C and D-D marked on Figure 2, to show the change in diameter and cross-sectional shape along the length of the handle 3. Figures 4A to 4D show views of section A-A, B-B, C-C, and D-D respectively. For clarity, the ribs 14a and the upper and lower tubular projections 12b, 14b are not shown in Figures 4A to 4D. There is a gentle change in diameter and cross-sectional shape between the two ends of the handle 3. This results in a handle 3 which is ergonomically dimensioned to accommodate a grasping hand, in order to maximise hand comfort for the user. In the preferred embodiment, the lower part 11 of the handle 3 makes up the whole lower half of the handle, and the upper part 10 of the handle 3 makes up the whole upper half of the handle. Variations on this embodiment are of course possible, in which the upper and lower parts 10, 11, of the handle 3 are two halves of the unitary structure as above, but arranged in a different orientation so that the handle 3 is split asymmetrically into upper and lower halves. Alternatively, the upper and lower parts 10, 11, of the handle 3 may make up non-equal proportions of the unitary structure.

In use, two of the present handles 3 are provided on a pushchair. Each handle 3 is gripped firmly by a user's hand, with the palm of the hand resting on the first external surface 8 of the upper part 10 of the handle 3, which is made of low friction polypropylene and thus allows the user's hand to slide on it during use of the push-chair. This is especially important for steering purposes during the pushing of the pushchair, and also allows the user to adjust and reposition their hands on the handles 3 quickly and easily during pushing, in order to achieve the optimum position for efficient pushing and maximum comfort throughout use of the handles 3. The user's fingers and thumb curl in opposite directions around the underside of the handle 3 to grip the handle 3, the gripping surface of the fingers being the second external surface 9 of the lower part 11 of the handle 3, which is made from thick 'soft' Santoprene. Having a higher coefficient of friction than the first external surface 8, this provides an extremely effective non-slip gripping surface for the user's fingers. Santoprene and other similar rubberized plastics are soft to the touch and therefore produce a comfortable surface for the user to hold. Such rubberized plastics may also be deformable, which again significantly increases the degree of comfort for the user compared to conventional rigid surfaces by providing a surface which adapts to the shape of the hands and reduces excessive pressure on any one particular area. The present handle is therefore extremely comfortable to hold, incorporating a soft-grip non-slip gripping area where grip is required, and a low-friction area on which hands may slide in order to steer a pushchair and for quick and easy readjustment of the hand position for maximum comfort during pushing.

In a modified form of this embodiment (not shown), the handle comprises an upper part and two lower shell sections, the two lower sections being clipped together before being overmoulded with the second external surface.

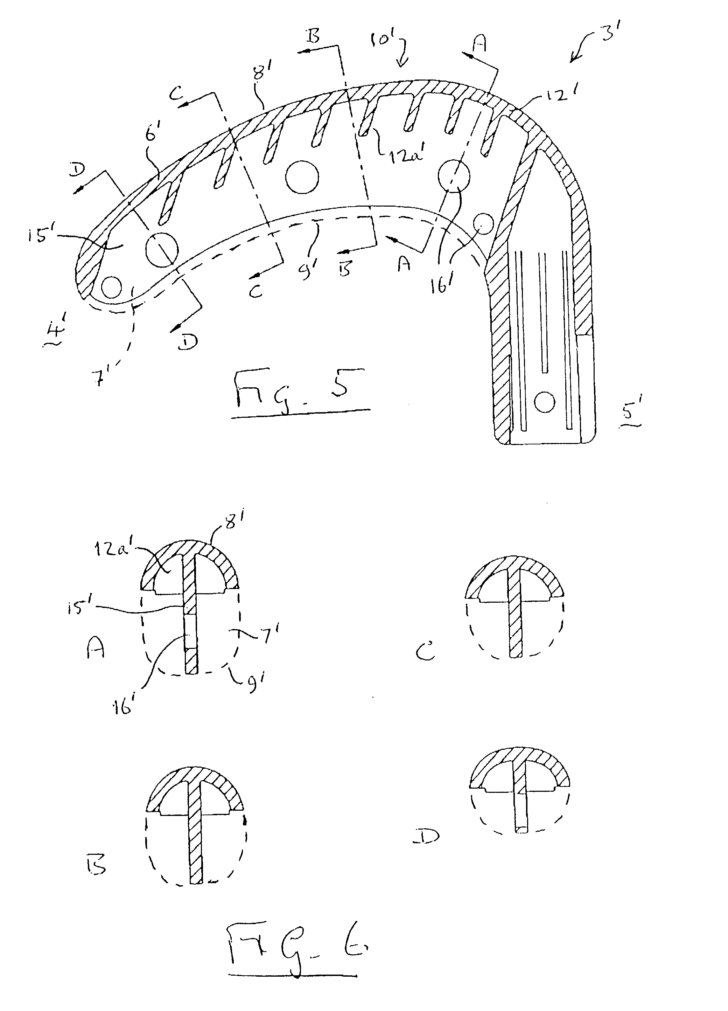

Figures 5 and 6 show a second form of handle; the references match those of the handle of Figures 2 to 4 with the addition of primes ('). In this handle, there is an upper part 10' but no separate lower part. Instead, the lower part is formed by overmoulding of the rubberized plastic material 7' over the upper part 10'. Figures 5 and 6 show the upper part 10' of the handle, with the regions into which the rubberized plastic material 7' is to be moulded shown in broken line outline. The upper part 10' of the handle is provided with ribs 12a'; in addition, it has a central longitudinal rib or web 15' running along its whole length. This rib 15' has holes 16' in it to improve the engagement of the rubberized plastic material 7' with the upper part 10' of the handle 3'.

A variety of further variations are also possible. Further embodiments could involve a handle incorporating more than two external surfaces, a handle could be made using other materials than those specified, and more than two materials could be used. For example, the lower shell may be made of a different material to the upper shell, and/or more than a single rubberized plastic material may be incorporated. The second surface (the soft-grip surface) could be textured in any suitable way to further increase grip, and/or finger mouldings could be incorporated into the handle to further enhance comfort and grip.

In summary, there is provided a handle for a push-chair made primarily of rigid, hard material such as polypropylene, nylon or another rigid plastic. To provide improved grip and comfort, the lower part 9 of the present handle is made of a soft-feel, deformable, rubber-like 'soft-grip' surface material 7 with a high co-efficient of friction, such as a rubberized plastic such as such as thick 'soft' Santoprene or PTR. The lower part of the handle may be made separately from the main body (upper part) and joined by suitable coupling means, or it may be formed by directly overmoulding the material 7 onto the upper part.

## Claims

1. A push-chair handle (3), *characterized in that* its upper part (10) is formed of a first material (6) which is relatively rigid and has a relatively low co-efficient of friction, and its lower part (11) is formed of a second material (7) which has a higher co-efficient of friction than the first material.

2. A handle according to claim 1, characterized in that the lower part of the handle comprises finger-shaped grooves.

3. A handle according to either previous claim, characterized in that the first material is a plastic material.

4. A handle according to any previous claim, characterized in that the second material is a rubberized plastic material.

5. A handle according to any previous claim, characterized in that the handle comprises an upper shell and a lower part which co-operates and fits together with the upper shell by coupling means to form a unitary structure.

6. A handle according to claim 5, characterized in that the upper shell incorporates a series ofparallel ribs (12a).

7. A handle according to either of claims 5 and 6, characterized in that the upper shell incorporates at least one longitudinal sheet (16').

8. A handle according to any one of claims 5 to 7, characterized in that the lower part comprises at least one shell (14) made of the first material, and a lower external layer (13) made of the second material.

9. A handle according to claim 8, characterized in that the lower external layer is formed by overmoulding the lower shell with the second material.

10. A handle according to either of claims 8 and 9, characterized in that the coupling means comprises corresponding pairs of tubular projections (12b, 12c, 14b) extending one from each of the two shells, on projection of each pair forming a recess into which the other projection of the pair fits.

11. A handle according to any one of claims 8 and 9, characterized in that the upper and lower parts of the handle are coupled by means of an interference fit.

12. A handle according to either of claims 8 and 9, characterized in that the upper and lower parts of the handle are coupled by means of a snap-fit mechanism.

13. A handle according to any one of claims 5 to 7, characterized in that the lower part of the handle is formed by directly overmoulding the second material onto the upper shell.
